# EUROPEAN PATENT APPLICATION

(11) **EP 3 333 756 A1**
(43) Date of publication of application: **13.06.2018**
(21) Application number: 17205331.6
(22) Date of filing: 05.12.2017
(51) Int. Cl.: G06K 7/00

(54) **APPARATUS AND METHOD OF REDUCING MOVEMENT OF AN INSERTABLE DEVICE DURING TEMPERATURE CYCLES**

(30) Priority: 06.12.2016 US 201662430433 P
(71) Applicant: THOMSON LICENSING, 92130 Issy les Moulineaux (FR)
(72) Inventor: WILLIAMS, Kevin, Indianapolis, IN Indiana 46290 (US)
(74) Representative: Huchet, Anne

(57) **Abstract**

An electronic card insertion detection in an electronic device is provided. In one example, a spring or detection element (410) for the electronic card insertion is positioned in a cavity of the electronic card slot of the electronic device. The detection element is adapted so that changes in the temperature of the environment and/or the spring force of the detection element will not unintentionally dislodge or push out the electronic card from the electronic card slot.

## Description

### TECHNICAL FIELD

The present principles generally relate to insertable device detection in an electronic device, such as detection of insertion of an electronic card, and particularly to an improved detection element for the insertable device insertion.

### BACKGROUND

This section is intended to introduce to the reader various aspects of background information which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Various types of devices suitable for insertion into and removal from electronic devices are in use today for various electronic applications. Such devices are generally referred to herein as insertable devices. Such devices provide flexibility for configuration of and use of electronic systems in various applications. One example of an insertable device comprises an electronic card such as a smart card which is a card that includes an embedded integrated circuit. Another example comprises a memory card or memory device. For ease of explanation, the description herein refers primarily to electronic cards such as a smart card. However, it will be readily apparent that embodiments described herein encompass various insertable devices other than electronic cards such as a smart card.

An insertable device such as a smart card may have either a secure microcontroller or equivalent intelligence with internal memory, or a memory chip alone. The smart card may connect to a card reader with either a direct physical contact or with a remote contactless radio frequency interface. When with the direct physical contact, the smart card is typically inserted into a smart card slot of a card reader of an electronic device.

With an embedded microcontroller, a smart card has the ability to store large amounts of data, carry out their own on-card functions (e.g., providing encryption and mutual authentication), and/or interact intelligently with a smart card reader of an electronic device. Smart card technology may conform to international standards such as e.g., ISO/IEC 7816 and ISO/IEC 14443, and is available in a variety of form factors, including plastic cards.

Many of media and/or television receiving devices today incorporate a smart card as part of a conditional access system (CAS) for content rights management. For example, conditional access system for Digital Video Broadcasting (DVB) standards are defined in the specification documents for DVB-CA (conditional access), DVB-CSA (the common scrambling algorithm) and DVB-CI (the Common Interface). These standards define a method by which a content provider may scramble a digital-television stream, with access provided only to those receiving devices with valid decryption smart cards. The DVB specifications for conditional access are available from the standards page on the DVB website.

### SUMMARY

The present principles provide for improved insertable device insertion detection apparatuses and methods. In accordance with the present principles, a detection element or spring for detecting insertion of an insertable device such as an electronic card is positioned in a cavity of the electronic device. The spring is adapted so that changes in the temperature of the environment and/or an excessive elastic force of the spring will not dislodge or push out the electronic card from the electronic card slot unintentionally.

Accordingly, an apparatus for detecting an insertion of an insertable device is provided comprising: a cavity for accepting the insertable device; a spring having a first elastic portion positioned within the cavity and for making an electrical connection with a first side of the cavity, and a second portion fixed in position by a second side of the cavity, wherein the insertion of the insertable device pushes the first elastic portion away from the first side of the cavity and breaks the electrical connection as the insertable device is inserted into the cavity; and wherein the first elastic portion of the spring has a surface profile which is narrower at a first section than at a second section of the first elastic portion.

In another exemplary embodiment according to the present principles, an apparatus for detecting an insertion of an electronic card is provided, comprising: a cavity for accepting the electronic card; a spring having a first elastic portion positioned within the cavity and for making an electrical connection with a first side of the cavity, and a second portion fixed in position by a second side of the cavity, wherein the insertion of the electronic card pushes the first elastic portion away from the first side of the cavity and breaks the electrical connection as the electronic card is inserted into the cavity; and wherein the first elastic portion of the spring has a surface profile which is thinner at a first section than at a second section of the first elastic portion.

In another exemplary embodiment according to the present principles, a method for detecting an insertion of an electronic card is provided, comprising: providing a cavity for accepting the electronic card; and providing a spring having a first elastic portion positioned within the cavity and for making an electrical connection with a first side of the cavity, and a second portion fixed in position by a second side of the cavity, wherein the insertion of the electronic card pushes the first elastic portion away from the first side of the cavity and breaks the electrical connection as the electronic card is inserted into the cavity; and wherein the first elastic portion of the spring has a surface profile which is thinner at a first section than at a second section of the first elastic portion.

In another exemplary embodiment according to the present principles, an apparatus for detecting an insertion of an electronic card is provided, comprising: a cavity for accepting the electronic card; a spring having a first elastic portion positioned within the cavity and for making an electrical connection with a first side of the cavity, and a second portion fixed in position by a second side of the cavity, wherein the insertion of the electronic card pushes the first elastic portion away from the first side of the cavity and breaks the electrical connection as the electronic card is inserted into the cavity; and wherein the first elastic portion of the spring comprising a bend portion, the bend portion further comprising a first bend portion having a first slope and a second bend portion having a second slope different than the first slope.

In accordance with another aspect, an exemplary embodiment of apparatus for detecting an insertion of an insertable device in accordance with the present principles comprises: a cavity for accepting the insertable device; a spring having a first elastic portion positioned within the cavity and for making an electrical connection with a first side of the cavity, and a second portion fixed in position by a second side of the cavity, wherein the insertion of the insertable device pushes the first elastic portion away from the first side of the cavity and breaks the electrical connection as the insertable device is inserted into the cavity; and wherein the first elastic portion of the detection element has a surface profile including a first section having a first dimension and a second section having a second dimension different from the first dimension.

In accordance with another aspect, an exemplary embodiment of a method for detecting an insertion of an insertable device in accordance with the present principles comprises: providing a cavity for accepting the electronic card; and providing a spring having a first elastic portion positioned within the cavity and for making an electrical connection with a first side of the cavity, and a second portion fixed in position by a second side of the cavity, wherein the insertion of the electronic card pushes the first elastic portion away from the first side of the cavity and breaks the electrical connection as the electronic card is inserted into the cavity, and wherein the first elastic portion of the detection element has a surface profile including a first section having a first dimension and a second section having a second dimension different from the first dimension.

In accordance with another aspect, an exemplary embodiment of an apparatus or method in accordance with the present principles may further comprise the first dimension being less than the second dimension.

In accordance with another aspect, an exemplary embodiment of an apparatus or method in accordance with the present principles may further comprise the first section being narrower than the second section.

In accordance with another aspect, an exemplary embodiment of an apparatus or method in accordance with the present principles may further comprise the first section being thinner than the second section.

In accordance with another aspect, an exemplary embodiment of an apparatus or method in accordance with the present principles may further include the first elastic portion of the spring comprising a bend portion, the bend portion further comprising a first bend portion having a first slope and a second bend portion having a second slope different than the first slope.

In accordance with another aspect, an exemplary embodiment of an apparatus or method in accordance with the present principles may further comprise the first bend portion being longer than the second bend portion, and the second bend portion having a steeper slope than the first bend portion.

In accordance with another aspect, an exemplary embodiment of an apparatus or method in accordance with the present principles may further comprise the first side of the cavity being metal and being connected to a ground of a printed circuit board of an electronic device.

In accordance with another aspect, an exemplary embodiment of an apparatus or method in accordance with the present principles may further comprise the first elastic portion being a piece of metal.

In accordance with another aspect, an exemplary embodiment of an apparatus or method in accordance with the present principles may further comprise the second portion of the spring being connected to a detection connection of the printed circuit board of an electronic device.

In accordance with another aspect, an exemplary embodiment of an apparatus or method in accordance with the present principles may further comprise the second side including a plastic layer and the second portion of the spring being embedded in the plastic layer.

In accordance with another aspect, an exemplary embodiment of an apparatus or method in accordance with the present principles may further comprise the insertable device including an electronic card.

In accordance with another aspect, an exemplary embodiment of an apparatus or method in accordance with the present principles may further comprise the electronic card including a smart card.

In accordance with another aspect, an exemplary embodiment of an apparatus or method in accordance with the present principles may further comprise the surface profile being configured to prevent the electronic card from backing out of the cavity during a thermal cycling.

In accordance with another aspect, an exemplary embodiment of an apparatus in accordance with the present principles may comprise an electronic device including apparatus for detecting insertion of an insertable device. In accordance with another aspect, the electronic device may comprise a gateway device, a set-top box or a digital television.

### BRIEF DESCRIPTION OF THE DRAWINGS

The above-mentioned and other features and advantages of the present principles, and the manner of attaining them, will become more apparent and the present principles will be better understood by reference to the following description of embodiments of the present principles taken in conjunction with the accompanying drawings, wherein like-numbered features among the various views indicate the same or similar features, and wherein:
Fig. 1 shows an exemplary apparatus according to the present principles, with an electronic card not fully inserted into an electronic card slot of an electronic device;
Fig. 2 shows an exemplary apparatus according to the present principles, with an electronic card fully inserted into an electronic card slot of an electronic device;
Fig. 3 shows an example of an elastic portion of a spring or detection element of an exemplary apparatus according to the present principles;
Fig. 4 shows another example of an elastic portion of a detection element or spring of an exemplary apparatus according to the present principles;
Fig. 5 shows other examples of an elastic portion of a detection element or spring of an exemplary apparatus according to the present principles;
Fig. 6 shows an exemplary process according to the present principles; and
Fig. 7 shows another example of an elastic portion of a detection element or spring of an exemplary apparatus according to the present principles.

The examples set out herein illustrate exemplary embodiments of the present principles. Such examples are not to be construed as limiting the scope of the present principles in any manner.

### DETAILED DESCRIPTION

The present description illustrates the present principles. It will thus be appreciated that those skilled in the art will be able to devise various arrangements that, although not explicitly described or shown herein, embody the present principles and are included within its scope. For example, reference to an electronic card or smart card is intended to encompass various insertable devices, i.e., devices that may be inserted into an electronic device including but not limited to devices such as a set-top box, gateway device, and digital television.

All examples and conditional language recited herein are intended for aiding the reader in understanding the present principles and the concepts contributed by the inventors to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Reference in the specification to "one embodiment", "an embodiment", "an exemplary embodiment" of the present principles, or as well as other variations thereof, means that a particular feature, structure, characteristic, and so forth described in connection with the embodiment is included in at least one embodiment of the present principles. Thus, the appearances of the phrase "in one embodiment", "in an embodiment", "in an exemplary embodiment", or as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

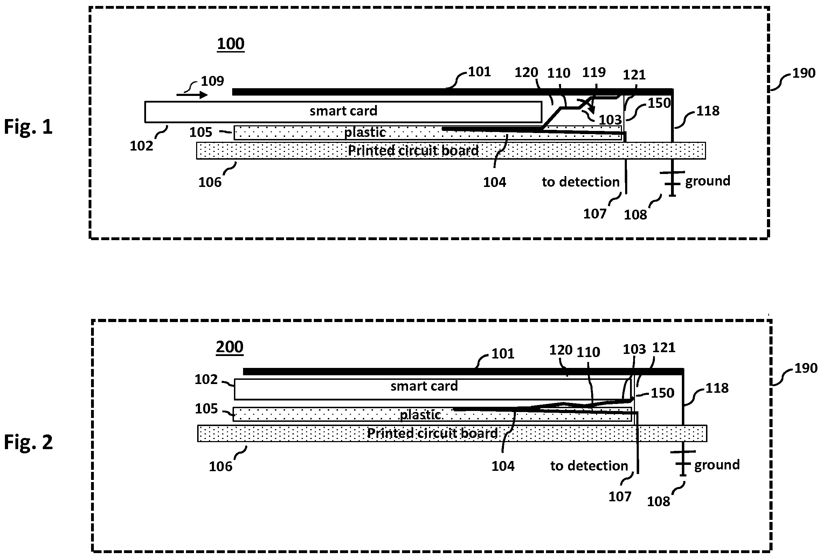

Fig. 1 shows a side, cut-away view of an exemplary apparatus 100 of the present principles. The exemplary apparatus 100 may reside in an electronic device 190. In an exemplary embodiment, the electronic device 190 is a home media server model HS17 from Technicolor, Inc., the parent company of the assignee of the present application. The Technicolor home media server model HS 17 is a high-end home media server that provides media content from a satellite broadcast system to home client devices over a variety of home network formats (e.g., wired and wireless) in a uniquely aesthetic industrial design package.

As shown in Fig. 1, the exemplary apparatus 100 is provided in the electronic device 190 for detecting an insertion of an electronic card 102 into a card reader slot 150. The electronic card may be, e.g., a smart card 102 which is part of a conditional access system of the electronic device 190 as described previously. The card reader slot 150 comprises three sides, a first, top side 101; a second, bottom side 105; and a third, end side 121. These three sides 101, 105 and 121 form a cavity 120 into which the smart card 102 may be slid into, in the direction shown by an arrow 109, so that the smart card 102 may be fully and securely inserted into the card reader slot 150 and to be read by and interacts with the electronic device 190.

In accordance with the present principles, as shown in Fig. 1, the exemplary apparatus 100 may comprise a detection element 110 such as a spring, e.g., a leaf spring, having a first elastic portion 103 and a second portion 104. In one exemplary embodiment, the material of the detection element or spring 110 may be comprised of conductive material such as a type of metal. In one exemplary embodiment, the type of metal, may be e.g., stainless steel or aluminum. In another exemplary embodiment, the detection element 110 may be made using a single piece of material (i.e., in a "single-body" or "uni-body" construction).

As shown in Fig. 1, the first elastic portion 103 of the detection element or spring 110 is positioned within the cavity 120. The elastic portion 103 is also in a naturally upright position and is making an electrical connection with the top side 101 of the cavity 120, when the smart card 102 has not been fully inserted into the cavity 120. In one exemplary embodiment, the top side 101 of the cavity 120 may be a conductive metal plate 101 covering the top side of the cavity 120, and the conductive metal plate 101 is connected through a connection 118 to a ground plane 108 of a printed circuit board 106 of the electronic device 190, as shown in Fig. 1.

In addition, according to the present principles, the exemplary detection element 110 may comprise a second portion 104 which is fixed in position by a second, bottom side 105 of the cavity 120 as shown in Fig. 1. In one exemplary embodiment, the second, bottom side 105 of the cavity 120 may be made out of an insulating material such as e.g., plastic. According to the present principles, the second portion 104 of the exemplary detection element 110 may be fixed in position by the second, bottom side 105 of the cavity 120 in a variety of ways as well known in the art. For example, in one embodiment, the second, bottom side 105 may be a piece of plastic with the second portion 104 of the detection element 110 partially or fully embedded into the plastic layer 105 as illustrated in Fig. 1. In another embodiment, the second portion 104 of the detection element 110 may be fixed to the bottom side 105 by gluing, screwing, and/or being inserted into one or more slots (not shown) of the bottom side 105.

According to the present principles, therefore, when the exemplary smart card 102 is inserted into the card slot 150 in the direction as indicated by the arrow 109, the first elastic portion 103 of the detection element 110 is pushed away from the top side 101 of the cavity 120 in a direction illustrated by the arrow 119, as shown in Fig. 1. Accordingly, the electrical connection between the first elastic portion 103 and the top side 101 is broken as the smart card 102 is inserted into the cavity 120. This break in the electrical connection between the first elastic portion 103 and the top side 101 may be detected by a detection circuitry of the electronic device 190 through a connection 107 of the printed circuit board 106 as shown in Fig. 1. That is connection 107 becomes ungrounded when the smart card 102 is fully inserted into slot 150. This detection may be performed, e.g., by an I/O port of a processor (not shown) of the electronic device as well known in the art. In accordance with an aspect of the present principles, this detection may be used as an indication by the electronic device that a smart card 102 has been fully and securely inserted into the card reader slot 150. Fig. 2 shows when the smart card 102 is fully inserted into the cavity 120 of the card reader slot 150 of the exemplary apparatus 100 according to the present principles.

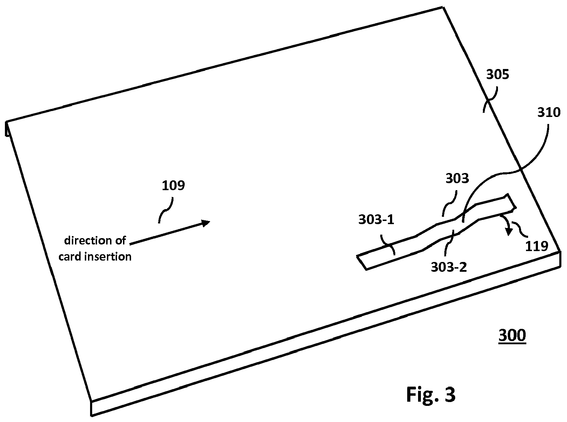

Fig. 3 illustrates a perspective view of an exemplary embodiment 300 of a first elastic portion 303 of a detection element 310 according to the present principles. As has already been described before in connection with Fig. 1 and Fig. 2, the second bottom portion of the detection element 310 is fixed in position by a bottom layer 305 and its view is also obstructed by this bottom layer 305 as shown in Fig. 3. Also, as described previously in connection with Fig. 1 and Fig. 2, this bottom layer 305 would form a bottom layer of a cavity 120 of a card reader slot 150 as shown in Fig. 1 and Fig. 2. The first elastic portion 303 of the detection element 310 has a surface profile which comprises a first section 303-1 and a second section 303-2 as shown in Fig. 3. In Fig. 3, insertion of an electronic card in direction 109 results in the leading edge of the electronic card making contact with detection element 310 in the same manner as previously described in regard to Fig. 1 and Fig. 2. As a result, section 303-2 of elastic portion 303 of spring or detection element 310 deflects toward bottom layer 305 as indicated by arrow 119 in Fig. 3. The described deflection corresponds to the deflection of section 103 of spring or detection element 100 in the direction indicated by arrow 119 shown in Fig. 1.

According to one exemplary aspect of the present principles, the exemplary electronic device, Technicolor home media server model HS17, having the exemplary surface profile shown in Fig. 3, was put through environment testing as part of its development. During the environmental testing, errors were detected indicating that the server was losing conditional access authorization. These errors were subsequently tracked down to the problem that the smart card would back out of the card reader slot and become not fully inserted. The backing out of the smart card is found to be caused by the thermal cycling test (e.g., with temperature cycles of 0° C to 50° C with 10 minute ramp, 30 minute dwell) and/or an excessive spring force of the first elastic portion 303 of the spring or detection element 310 as shown in Fig. 3.

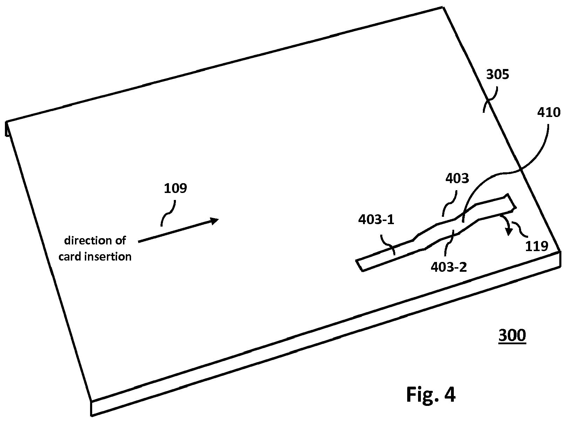

To solve the above problem according to an aspect of the present principles, an improved elastic portion 403 of an improved spring or detection element 410 is provided as shown in Fig. 4. An aspect of improved detection element 410 comprises a surface profile of an elastic portion 403 configured to provide a reduced a spring force during insertion of an insertable device, thereby enabling proper insertion of an insertable device (i.e., complete or full insertion) and prevent problems during use of an electronic device, such as backing out of an insertable device due to environmental issues such as thermal cycling. That is, an aspect of an improved spring or detection element 410 in accordance with the present principles comprises an improved surface profile of an elastic portion 403 reducing a spring force of the spring or detection element 410 and preventing the backing out of the smart card during the thermal cycle environmental test as described above.

In an exemplary embodiment, the improved elastic portion 403 of the improved detection element 410 has a surface profile having a first dimension at a first section 403-1 less than a second dimension at a second section 403-2. In accordance with an aspect of the present principles, the first dimension differs from the second dimension. For example, the first dimension is less than the second dimension or vice-versa.

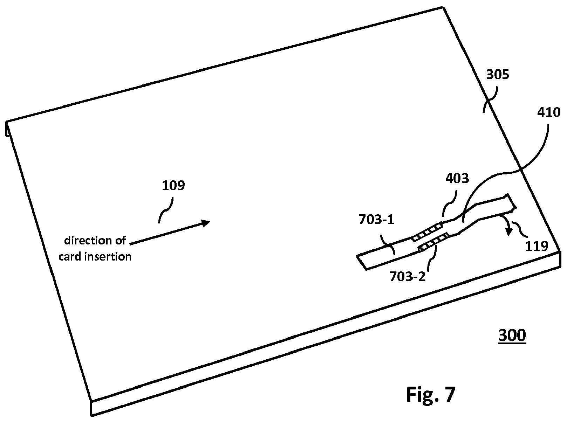

In accordance with another aspect of the present principles, the surface profile is narrower at a first section 403-1 than at a second section 403-2 of the first elastic portion 403. For example, the first section has a first dimension comprising a first width of at least a portion of the first section. The second section has a second dimension comprising a second width of at least a portion of the second section. The first width is less than the second width, thereby making the first section narrower than the second section. In another non-limiting exemplary embodiment shown in Fig. 7, the surface profile of a second section 703-2 of first elastic portion 403 may be made narrower than the surface profile of a first section 703-1. For example, at least a portion of second section 703-2 such as the exemplary shaded portion on one side or both sides of section 703-2 shown in Fig. 7 may be removed, thereby making at least a portion of the second dimension of the second section, e.g., section 703-2, narrower than the first dimension of the first section, e.g., section 703-1.

In another non-limiting exemplary embodiment, the first and second dimensions of the first and second sections, respectively, may comprise first and second thicknesses of the first and second sections. The first thickness may be less than the second thickness. For example, in Figure 4, a cross section thickness of material (e.g., metal) of at least a portion of the first section 403-1 may be made thinner than a cross section thickness of at least a portion of the second section 403-2, or vice versa.

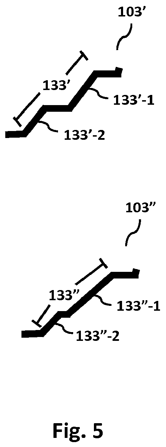

Fig. 5 shows two side views of two exemplary first elastic portions 103' and 103" of a detection element (e.g., 110 in Fig. 1) according to the present principles. Both of these elastic portions 103' and 103" have respectively a bend portion 133' and 133" as shown in Fig. 5. As already described above, it was found that during the environment testing of the exemplary Technicolor electronic device that the elastic portion 103' having the side profile of 103' shown in Fig. 5 was causing the backing out of the smart card during the thermal cycling test (e.g., with temperature cycles of 0° C to 50° C with 10 minute ramp, 30 minute dwell) due to the excessive spring force of the first elastic portion 103'.

Accordingly, an improved first elastic portion 103" of a detection element with the side profile of 103" shown in Fig. 5 is provided to prevent the electronic card from backing out of the cavity of a card reader slot during the thermal cycling, according to the present principles. In an exemplary embodiment, the exemplary first elastic portion 103" comprising a bend portion 133", the bend portion 133" further comprising a first bend portion 133"-1 having a first slope and a second bend portion 133"-2 having a second slope different than the first slope, as shown in 103" of Fig. 5. In another exemplary embodiment according to the present principles, the first bend portion 133"-1 is longer than the second bend portion 133"-2, and the second bend portion 133"-2 has a steeper slope than the first bend portion 133"-1, as shown in 103" of Fig. 5.

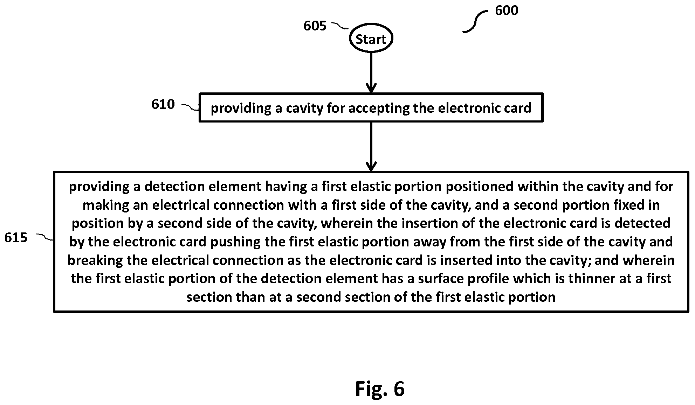

Fig. 6 shows an exemplary process 600 according to the present principles. The exemplary process starts at 605. At 610, a cavity for accepting the electronic card is provided, as shown in, e.g., Fig. 1 and Fig. 2. At 615, the exemplary process 600 provides a spring or detection element having a first elastic portion positioned within the cavity and for making an electrical connection with a first side of the cavity, and a second portion fixed in position by a second side of the cavity, as shown in e.g., Fig. 1 and Fig. 2. The insertion of the electronic card pushes the first elastic portion away from the first side of the cavity and breaks the electrical connection as the electronic card is inserted into the cavity. That is, the insertion of the electronic card is detected by the electronic card pushing the first elastic portion away from the first side of the cavity and breaking the electrical connection as the electronic card is inserted into the cavity. The first elastic portion of the detection element has a surface profile which is thinner at a first section 403-1 than at a second section 403-2 of the first elastic portion, as illustrated in e.g., Fig. 4.

While several embodiments have been described and illustrated herein, other embodiments are contemplated. For example, other embodiments may be created by combining, deleting, modifying, or supplementing various features of the described embodiments. Those of ordinary skill in the art will readily envision a variety of other means and/or structures for performing the functions and/or obtaining the results and/or one or more of the advantages described herein, and each of such variations and/or modifications is deemed to be within the scope of the present embodiments. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings herein is/are used. Those skilled in the art will recognize, or be able to ascertain using no more than routine experimentation, many equivalents to the specific embodiments described herein. It is, therefore, to be understood that the foregoing embodiments are presented by way of example only and that, within the scope of the appended claims and equivalents thereof, the embodiments disclosed may be practiced otherwise than as specifically described and claimed. The present embodiments are directed to each individual feature, system, article, material and/or method described herein. In addition, any combination of two or more such features, systems, articles, materials and/or methods, if such features, systems, articles, materials and/or methods are not mutually inconsistent, is included within the scope of the present embodiment.

## Claims

1. An apparatus (300) for detecting an insertion of an insertable device (102) comprising:
a cavity (120) for accepting the insertable device (102);
a spring (410) having a first elastic portion (403) positioned within the cavity (120) and for making an electrical connection with a first side of the cavity (101), and a second portion (104) fixed in position by a second side of the cavity (105), wherein the insertion of the insertable device (102) pushes the first elastic portion (403) away from the first side of the cavity (101) and breaks the electrical connection as the insertable device (102) is inserted into the cavity (120); and
wherein the first elastic portion (403) of the detection element (410) has a surface profile including a first section (403-1) having a first dimension and a second section (403-2) having a second dimension different from the first dimension.

2. A method for detecting an insertion of an electronic card comprising:
providing (610) a cavity for accepting the electronic card; and
providing (615) a spring having a first elastic portion positioned within the cavity and for making an electrical connection with a first side of the cavity, and a second portion fixed in position by a second side of the cavity, wherein the insertion of the electronic card pushes the first elastic portion away from the first side of the cavity and breaks the electrical connection as the electronic card is inserted into the cavity, and wherein the first elastic portion of the detection element has a surface profile including a first section having a first dimension and a second section having a second dimension different from the first dimension.

3. The apparatus of claim 1 or the method of claim 2 wherein the first dimension is less than the second dimension.

4. The apparatus of claim 1 or the method of claim 2 wherein the first section is narrower than the second section.

5. The apparatus of claim 1 or the method of claim 2 wherein the first section is thinner than the second section.

6. The apparatus of any of claims 1 and 3 to 5 or the method of any of claims 2 to 5 wherein the first elastic portion of the spring comprises a bend portion (133"), the bend portion further comprising a first bend portion (133"-1) having a first slope and a second bend portion (133"-2) having a second slope different than the first slope.

7. The apparatus or method of claim 6 wherein the first bend portion is longer than the second bend portion, and the second bend portion has a steeper slope than the first bend portion.

8. The apparatus of any of claims 1 and 3 to 7 or the method of any of claims 2 to 7 wherein the first side of the cavity (101) is metal and is connected to a ground of a printed circuit board (106) of an electronic device.

9. The apparatus of any of claims 1 and 3 to 8 or the method of any of claims 2 to 8 wherein first elastic portion (403) is a piece of metal.

10. The apparatus of any of claims 1 and 3 to 9 or the method of any of claims 2 to 9 wherein the second portion of the spring is connected to a detection connection (107) of the printed circuit board of an electronic device.

11. The apparatus of any of claims 1 and 3 to 10 or the method of any of claims 2 to 10 wherein the second side (105) comprises a plastic layer and the second portion (104) of the spring is embedded in the plastic layer.

12. The apparatus of any of claims 1 and 3 to 11 or the method of any of claims 2 to 11 wherein the insertable device comprises an electronic card.

13. The apparatus of any of claims 1 and 3 to 12 or the method of any of claims 2 to 12 wherein the electronic card comprises a smart card.

14. The apparatus of any of claims 1 and 3 to 13wherein the surface profile is configured to prevent the electronic card from backing out of the cavity during a thermal cycling.

15. An electronic device comprising apparatus for detecting insertion of an insertable device in accordance with any of claims 1 and 3 to 14.
